# EUROPÄISCHE PATENTSCHRIFT

(11) **EP 1 412 634 B1**
(45) Veröffentlichungstag und Bekanntmachung des Hinweises auf die Patenterteilung: **22.11.2006**
(21) Anmeldenummer: 02794492.5
(22) Anmeldetag: 01.08.2002
(51) Int. Cl.: F02M 69/04, F02F 3/26, F02B 23/10, F02F 1/42

(54) **GEMISCHBILDUNGS- UND BRENNVERFAHREN FÜR WÄRMEKRAFTMASCHINEN MIT KRAFTSTOFF-DIREKTEINSPRITZUNG**
MIXTURE FORMATION AND COMBUSTION METHOD FOR A HEAT ENGINE WITH DIRECT FUEL INJECTION
PROCEDE DE FORMATION DE MELANGE ET DE COMBUSTION POUR MOTEURS THERMIQUES A INJECTION DIRECTE DU CARBURANT

(30) Priorität: 02.08.2001 DE 10137469
(43) Veröffentlichungstag der Anmeldung: 28.04.2004
(73) Patentinhaber: Stan, Cornel, 08280 Aue (DE)
(72) Erfinder: Stan, Cornel, 08280 Aue (DE)
(74) Vertreter: Rumrich, Gabriele
(86) Internationale Anmeldenummer: PCT/DE2002/002823
(87) Internationale Veröffentlichungsnummer: WO 2003/014559

(56) Entgegenhaltungen:
- EP-A- 1 088 971
- DE-C- 288 507
- US-A- 4 811 708
- PATENT ABSTRACTS OF JAPAN vol. 1998, no. 11, 30. September 1998 (1998-09-30) & JP 10 176628 A (TOYOTA MOTOR CORP), 30. Juni 1998 (1998-06-30)

## Beschreibung

Die Erfindung betrifft ein Gemischbildungs- und Brennverfahren für Wärmekraftmaschinen mit Kraftstoff-Direkteinspritzung durch zwei oder mehrere Einspritzdüsen je Brennraum, mit deren Hilfe Kraftstoffstrahlen mit kegelförmiger Kraftstoffoberfläche gebildet werden, wobei der Brennraum von einem überwiegend unprofilierten Boden des Kolbens begrenzt wird. Weiterhin betrifft die Erfindung eine Vorrichtung zur Durchführung des Verfahrens.

Bevorzugte Anwendungsgebiete sind Ein- und Mehrzylinder-Otto- und Dieselmotoren mit Direkteinspritzung konventioneller und alternativer Kraftstoffe mittels Mehrlochdüsen und Zapfendüsen.

Kolbenmotoren mit Kraftstoff-Direkteinspritzung im Otto- und Dieselverfahren sind überwiegend mit einer Einspritzdüse je Zylinder ausgestattet.

Bei Ottomotoren mit Direkteinspritzung wird allgemein ein homogenes Luft-Kraftstoffgemisch für Volllastbetrieb bzw. eine Gemischbildung für Teillastbetrieb angestrebt

Eine wesentliche Anforderung an das Einspritzsystem ist die ausreichende Zerstäubung des Kraftstoffes, wodurch eine ausreichende Homogenisierung des Luft-Kraftstoffgemisches im gesamten Brennraum - bei Volllast - oder in einer Schicht - bei Teillast - und dadurch eine möglichst vollständige Verbrennung mit geringer Verzögerung zustande kommt.

Die Kraftstoffzerstäubung bedingt geringe Durchflussquerschnitte durch die Einspritzdüse.

Um die erforderliche Einspritzmenge in einer vorgegebenen Dauer einzuspritzen wird dafür bei den bisher bekannten technischen Lösungen die Kraftstoff-Austrittsgeschwindigkeit entsprechend hoch gesetzt, was bei den meisten Verfahren durch einen hohen Einspritzdruck realisiert wird. Eine hohe Tropfengeschwindigkeit führt jedoch allgemein zu einer entsprechenden Zunahme der Strahllänge. Die Brennräume moderner Kolbenmotoren sind allerdings sehr kompakt. Das führt im Falle der dargestellten Verfahren zu dem Nachteil eines sehr wahrscheinlichen Strahlaufpralls auf einer der Brennraumwände, wodurch die Bildung flüssiger Kerne, ein lokaler Sauerstoffmangel bzw. Reaktionen an der relativ kalten Brennraumwand vorkommen, was eine unvollständige Verbrennung mit erhöhter Kohlenwasserstoff-Emission verursacht Tropfengröße und Strahllänge stehen in diesem Zusammenhang teilweise in Widerspruch. Die Strahllänge wird nach einigen bekannten Verfahren durch Drallbewegungen des eingespritzten Kraftstoffes um die Strömungsachse zum Teil kompensiert.

Eine ausreichende Mischung bzw. eine kontrollierte Ladungsschichtung wird in den bisher bekannten Lösungen mit Unterstützung des Kraftstoffstrahls selbst, bzw. der Luftströmung im Zylinder und der Brennraumgestaltung vorgenommen.

Die bisher bekannten Verfahren werden daher allgemein in wand-, luft- und strahlgeführte Brennverfahren eingeteilt.

Bei wandgeführten Verfahren sind Einspritzdüse und Zündkerze in einem größeren Abstand zueinander montiert. Der eingespritzte Kraftstoff wird dabei mittels einer Brennraummulde zur Zündkerze geleitet, wobei eine durch Einlasskanäle und Brennraumgeometrie kontrollierte Spülluftbewegung (Tumble oder Drall) unterstützend wirkt.

Die Strahlumlenkung mittels Brennraummulde, die von der Luftbewegung teilweise unterstützt wird, erlaubt eine relativ toleranzunempfindliche Gemischbildung.

Der grundsätzliche Nachteil einer solchen Lösung ist die relativ hohe Kohlenwasserstoff-Emission, die durch Kraftstoffwandauftragung hervorgerufen wird.

Die strahlgeführten Verfahren haben diesen prinzipiellen Nachteil nicht, die Kontrolle der Gemischbildung ist allerdings viel komplexer und toleranzempfindlicher: die Strahlgeschwindigkeit und -länge muss dabei jeder Lastsituation angepasst werden, wofür eine anspruchsvolle Anpassung des Einspritzverlaufs erforderlich wird.

Die luftgeführten Verfahren erfordern eine intensive, gut kontrollierbare Drallbewegung der Spülluft während der Gemischbildung im Brennraum. Dadurch können prinzipiell die Wandauftragung des Kraftstoffs bzw. die Modulation des Einspritzverlaufs bei hohem Einspritzdruck relativiert werden. Die üblichen Strömungsverhältnisse während des Ladungswechsels erlauben allerdings eine eher geringe Strömungsintensität, die als alleiniger Träger der Gemischbildung nicht wirken kann.

Deswegen werden in neueren bekannten Verfahren alle drei beschriebenen Ansätze anteilmäßig kombiniert, wobei der Luftdrall als "forward tumble" oder als "reverse tumble" zwischen den dafür modifizierten Einlasskanälen und dem speziell geformten Kolbenboden realisiert wird. Solche kombinierten Verfahren sind effizienter für die innere Gemischbildung als einzelne Träger, sie können allerdings einige grundsätzliche Nachteile der wand-, luft- und strahlgeführten Verfahren nicht umgehen: die modernen Kolbenmotoren für Fahrzeuge weisen wegen der erforderlichen hohen hubraumbezogenen Leistung relativ hohe Drehzahlen auf. Um die Reibung zwischen Kolben und Zylinder im zulässigen Bereich zu halten, wird dafür das Hub/Bohrungsverhältnis reduziert. Bei gegebenem Verdichtungsverhältnis und Hubvolumen nimmt dabei der Kolbendurchmesser zu und der Abstand zwischen Kolben und Zylinderkopf im oberen Totpunkt ab.

Das ergibt eine extrem ungünstige Basis für die Brennraumgestaltung, in der ein Auftreffen des Kraftstoffstrahls auf einer Brennraumwand nicht zu vermeiden ist.

In Anbetracht des erforderlichen Einspritzvolumens einerseits und der geringen Durchflussquerschnitte bzw. der kurzen Einspritzdauer andererseits ist eine hohe Austrittsgeschwindigkeit und damit eine bestimmte Strahllänge selbst bei Bildung eines Dralls um die Strömungsachse unumgänglich.

Darüber hinaus sind der Bildung einer Kolbenmulde - die bei nahezu allen beschriebenen Verfahren erforderlich ist - enge Grenzen gesetzt. Das dadurch entstehende zusätzliche Brennraumvolumen führt entweder zur Senkung des Verdichtungsverhältnisses oder zur weiteren Verringerung des Spaltmaßes zwischen Kolben und Zylinderkopf. Diese Nachteile sind ohnehin durch die allgemein vorhandenen Ventiltaschen im Ansatz gegeben.

Bei Dieselmotoren mit Direkteinspritzung sind die beschriebenen Zusammenhänge prinzipiell ähnlich, ungeachtet dessen, dass eine Ladungsschichtung in Teillast nicht erforderlich ist. Obwohl das höhere Temperatumiveau im Brennraum und der höhere Druck im Einspritzsystem die Kraftstoffzerstäubung und -verdampfung wesentlich begünstigen, ist der Strahlkontakt mit der Kolbenoberfläche ungünstig für den Verbrennungsprozess.

Zur Überwindung dieser angeführten Mängel ist mit der EP 1 088971 A ein Verfahren bekannt, nach dem mindestens beim Aufeinandertreffen der Einspritzstrahlen von zwei Einspritzdüsen eine räumlich kompakte Gemischwolke entsteht. Ein wesentlicher Nachteil des Aufeinandertreffens von Einspritzstrahlen in der offenbarten Weise ist es, daß die Kraftstofftropfen miteinander kollidieren. Insofern ist der beschriebene Effekt im Sinne der Bildung einer kompakten Gemischwolke zwar richtig aber keineswegs vorteilhaft, weil im Kern dieser kompakten Gemischwolke die Verbrennungsluft fehlt

Außerdem führt die Kollision der Einspritzstrahlen bekanntermaßen zur Bildung größerer Tropfen, beziehungsweise zu einer hohen Kraftstoffkonzentration an den Auftreffstellen. Auch dadurch kann die entstehende Gemischwolke kaum mit zusätzlicher Verbrennungsluft in Kontakt kommen. Große Tropfen einerseits und große Kraftstoffkonzentrationen andererseits führen eindeutig zur unvollständigen Verbrennung, obwohl durch das Aufeinandertreffen der zwei Einspritzstrahlen einerseits ein Kontakt mit Brennraumoberflächen vermieden wird und andererseits eine Gemischwolke an der gewünschten Stelle, beispielsweise vor einer Zündkerze, entsteht.

Die ebenfalls bekannte technische Lösung gemäß EP 10176628 A weist ebensolche Nachteile auf, wobei in diesem Falle die vorgeschlagene waagerechte Anordnung der Einspritzstrahlachsen entlang einer einzigen Linie den vorbeschriebenen Kollisionseffekt noch verstärkt.

Die Aufgabe der Erfindung besteht deshalb darin, die Nachteile des bekannten Standes der Technik zu überwinden. Angestrebt wird eine technische Lösung, die mit einem relativ geringen Steuerungsaufwand und weitgehend ohne Brennraumanpassung Voraussetzungen für eine ausreichende Kraftstoffverteilung auf die Luft in einem kontrollierbaren Bereich des Brennraumes möglichst ohne Kraftstoffkontakt mit einer Brennraumwand für jede Last/Drehzahlkombination bietet.

Die zu entwickelnde technische Lösung soll die Kraftstoffverteilung in der Verbrennungsluft optimieren und die Bildung von flüssigen Kraftstoffkernen vermeiden. Diese Gemischbildung soll möglichst ohne Kraftstoffkontakt mit einer Brennraumwand in einem wählbaren Bereich des Brennraumes vorgenommen werden können.

Die angestrebte Lösung soll es weiterhin gestatten, die innige Bildung von Kraftstoff-Luft-Gemischen unter Vermeidung von beachtlichen Kraftstoffkontakten mit einer Brennraumwand möglichst für jede praktisch relavante Last-Drehzahl-Kombination zu sichern.

Die Aufgabe wird erfindungsgemäß durch die schutzbegründeten Merkmale der Ansprüche 1 bis 22 gelöst.

Das Gemischbildungs- und Brennverfahren für Wärmekraftmaschinen mit Kraftstoff-Direkteinspritzung ist dabei dadurch gekennzeichnet, dass im Wesentlichen zwei oder mehrere Einspritzdüsen je Brennraum vorgesehen sind - die vorzugsweise als Mehrlochdüsen oder Zapfendüsen ausgeführt sind - wobei die von jeder Düse teilweise oder vollständig gebildete Kraftstoffmantelfläche die Mantelflächen der weiteren Düsen in einem bestimmten Winkel und mit einer bestimmten Zuordnung der Symmetrieachse durchdringt. Bei unverändertem Durchflussquerschnitt einer Düse bleibt die Zerstäubungsqualität unverändert.

Die Zunahme der Anzahl der Düsen je Brennraum bewirkt allerdings eine Zunahme des gesamten Durchtiussquerschnittes. Für eine vorgegebene Einspritzmenge kann dabei sowohl die Austrittgeschwindigkeit und damit die Strahllänge je Düse reduziert, als auch die Einspritzdauer verkürzt werden. Weiterhin wird dabei die Kontaktfläche zwischen Luft und Kraftstoff durch zwei oder mehrere Mantelstrahlen entsprechend vervielfacht.

Die Kraftstoffmantelflächen - die bei Mehrlochdüsen durch einzelne Fadenströmungen und bei Zapfendüsen als kontinuierliche Fläche vorkommen - sind allgemein diffusorartig - als Hohlkegel - ausgebildet, wobei in der Mitte ein Luftkern besteht. Gemäß der Erfindung werden die Symmetrieachsen der Kraftstoffmantelflächen von zwei oder mehreren Düsen in einer Projektion innerhalb oder außerhalb des Brennraumes zusammengeführt. Das bewirkt ein Aufeinandertreffen der Hohlkegel im Brennraum, wobei die Kraftstofftropfen der Fäden oder der Flächen unterschiedlicher Hohlkegel auf ellipsenförmigen Linien zusammentreffen und einem Kraftstoffmantel bilden, d.h. in diesem Bereich ist die Kraftstoffkonzentration erhöht. In dieser Weise entsteht eine in sich geschlossene Kraftstoffoberfläche bestehend aus Schalen mit unterschiedlichen Formen, die in ihrer Mitte einen Luftkern einschließen. Das Aufeinandertreffen der Kraftstoffstrahlen aus unterschiedlichen Düsen bewirkt eine deutliche Verzögerung der Tropfengeschwindigkeit, wodurch das Auftreffen eines Strahls auf einer Brennraumwand im Wesentlichen verhindert wird.

Durch die Bildung von Hohlkegeln durch die Kraftstoffstrahlen und die Linienberührung der Hohlkegel wird das Auftreffen der Kraftstoffstrahlen auf die Brennraumwand weitgehend vermieden, die Bildung flüssiger Kraftstoffkerne ausgeschlossen und die Bildung eines stabilen Luftkerns realisiert.

In besonderen Ausführungsformen ist das Verfahren dadurch gekennzeichnet, dass die in sich geschlossene Kraftstoffoberfläche mit Luftkern durch die Auftreffwinkel der Symmetrieachsen von zwei oder mehreren Düsen in einer bestimmten Zone des Brennraumes, vorzugsweise in der Nähe der Zündkerze bei einem Ottomotor und in der Mitte des Brennraumes bei einem Dieselmotor gebildet wird.

In diesem Fall kann bei der Anwendung des Verfajrens bei Otto-Motoren infolge der realisierten Ladungsschichtung auf Luftdrosselvorrichtungen verzichtet werden beziehungsweise kann die Regulierung der Luftzufuhr weitgehend unabhängig von der Regulierung der Kraftstoffzufuhr erfolgen, da sich außerhalb des Kraftstoffmantels ein Luftraum bildet, welcher die Verbrennung des Kraftstoffs nicht direkt beeinflußt. Es wird demzufolge außerhalb des Kraftstoffmantels im übrigen Brennraum ein variables Luftverhältnis geschaffen.

Die in sich geschlossene Kraftstoffoberfläche mit Luftkern bleibt in der gleichen Position im Brennraum, auch bei einer Änderung der Strahllänge, die durch eine Variation der Einspritzmenge vorkommen kann. Andererseits ist diese Position von der Luftströmung kaum beeinflussbar. Damit ist die Position der entstandenen Kraftstoffoberfläche weitgehend last- und drehzahlabhängig.

Weiterhin ist es möglich, je nach vorhandenen Bedingungen im Brennraum, dass die Hohlkegelwinkel der auftreffenden Strahlen durch entsprechende Düsenauslegung unterschiedlich sind.

Es ist weiterhin möglich, dass die resultierende Kraftstoffoberfläche durch einen kombinierten Einsatz von Mehrloch- und Zapfendüsen zustande kommt.

In einer besonderen Ausführung des Verfahrens befinden sich die Symmetrieachsen der Strömungen von jeweils zwei Düsen in einem Brennraum in unterschiedlichen Ebenen - beispielsweise in parallelen Ebenen.

Durch den vorzugsweise geringfügigen Achsenversatz wird die Wahrscheinlichkeit des Zusammenpralls von Tropfen unterschiedlicher Strömungen weiterhin gemindert. Es entsteht dabei eine Bewegung des Kraftstoffs auf der gebildeten Oberfläche, die die Gemischbildung weiterhin begünstigt.

Es ist außerdem möglich sowohl fremdgesteuerte Einspritzdüsen - beispielsweise elektromagnetisch oder mechanisch - als auch kraftstoffgesteuerte Einspritzdüsen einzusetzen. Im letzteren Fall, der eine Hochdruckmodulation am Eingang jeder Düse voraussetzt, sind die Düsen besonders kompakt und relativ einfach aufgebaut, was im Bezug auf Platzbedarf und Aufwand von Vorteil ist.

In einer besonderen Ausführung des Verfahrens ist die Kraftstoffausströmung aus jeder Düse vor dem Auftreffen der Strahlen durch einen Drall um die eigene Symmetrieachse gekennzeichnet. Das bewirkt sowohl eine komplexere Form der resultierenden geschlossenen Kraftstoffoberfläche mit Luftkern, als auch eine bestimmte Geschwindigkeitsverteilung des Kraftstoffes auf dieser Oberfläche. Dadurch werden Gemischbildung und Verbrennung weiterhin begünstigt.

Des Weiteren ist es möglich, dass durch die unterschiedlichen Düsen in einem Brennraum auch unterschiedliche Kraftstoffe eingespritzt werden - beispielsweise Benzin und Methanol für Ottomotoren.

Die Erfindung wird nachstehend an einem Ausführungsbeispiel näher erläutert.

In den beiliegenden Zeichnungen zeigen
- Fig. 1:: die schematische Darstellung des Brennraumes eines Kolbenmotors mit zwei Einspritzdüsen, wobei sich die Symmetrieachsen der Düsen in gleicher Vertikalachse, entlang der Zylinderachse befinden;
- Fig. 2:: die schematische Darstellung des Brennraumes eines Kolbenmotors mit zwei Einspritzdüsen, wobei die Symmetrieachsen der Düsen in senkrechter und waagerechter Projektion einen Winkel aufweisen;
- Fig. 3:: eine geschlossene Kraftstoffoberfläche mit Luftkern in einem Brennraum als Ergebnis des Zusammentreffens zweier Einspritzstrahlen;
- Fig. 4:: Darstellung der Bildung der hohlkegelförmigen Kraftstoffstrahlen 0,28 ms nach Einspritzbeginn;
- Fig. 5:: Darstellung der Bildung der hohlkegelförmigen Kraftstoffstrahlen 0,56 ms nach Einspritzbeginn;
- Fig. 6:: Darstellung der Bildung der hohlkegelförmigen Kraftstoffstrahlen 0,83 ms nach Einspritzbeginn;
- Fig. 7:: Darstellung des Zusammentreffens zweier hohlkegelförmiger Kraftstoffstarhlen 1,11 ms nach Einspritzbeginn;
- Fig. 8:: Darstellung des Zusammentreffens zweier hohlkegelförmiger Kraftstoffstarhlen 1,38 ms nach Einspritzbeginn unter Bildung des Kraftstoffmantels und dem eingeschlossenen Luftkern;
- Fig. 9:: Darstellung des Zusammentreffens zweier hohlkegelförmiger Kraftstoffstarhlen 1,66 ms nach Einspritzbeginn unter Bildung des Kraftstoffmantels und dem eingeschlossenen Luftkern.

### Ausführungsbeispiel:

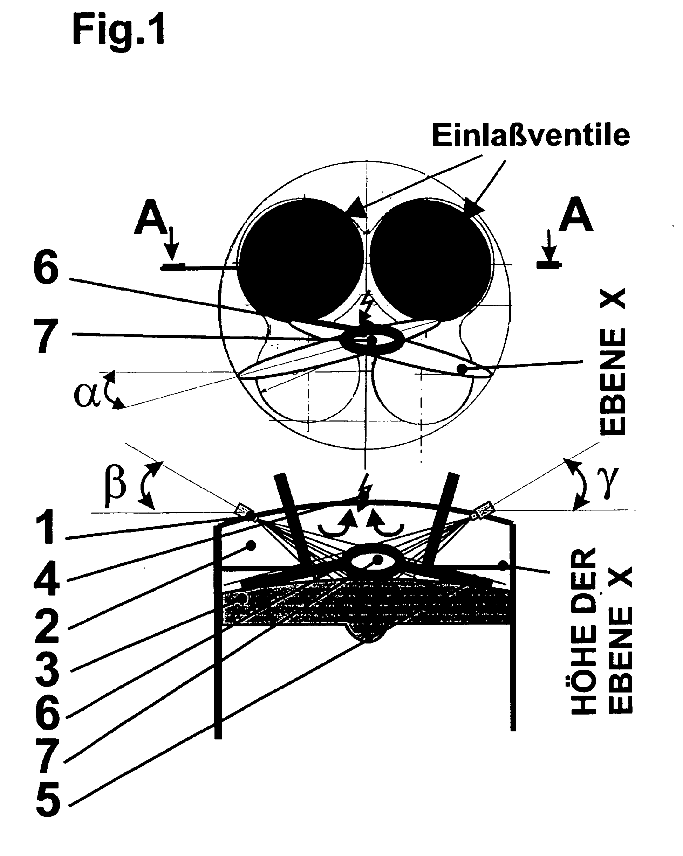

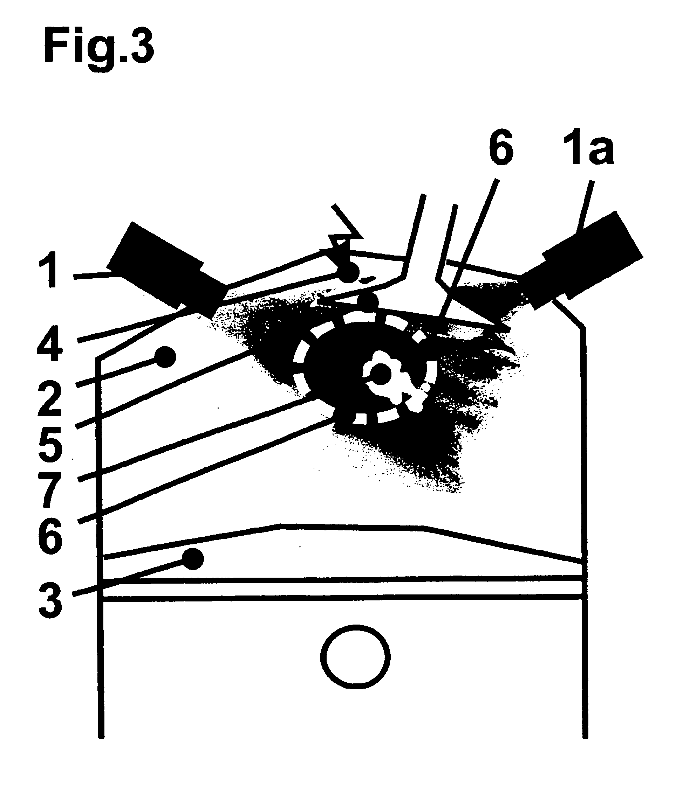

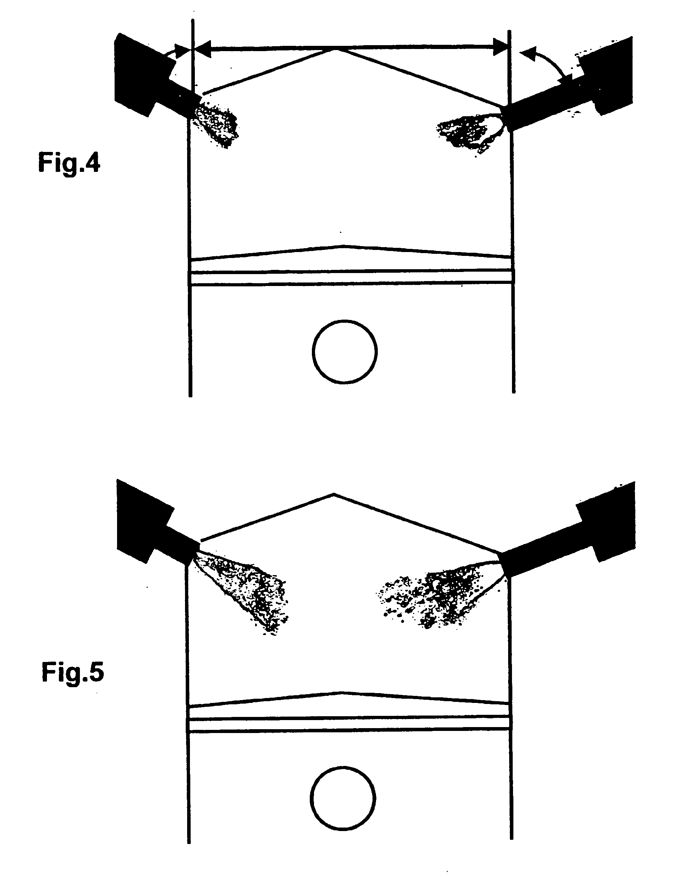

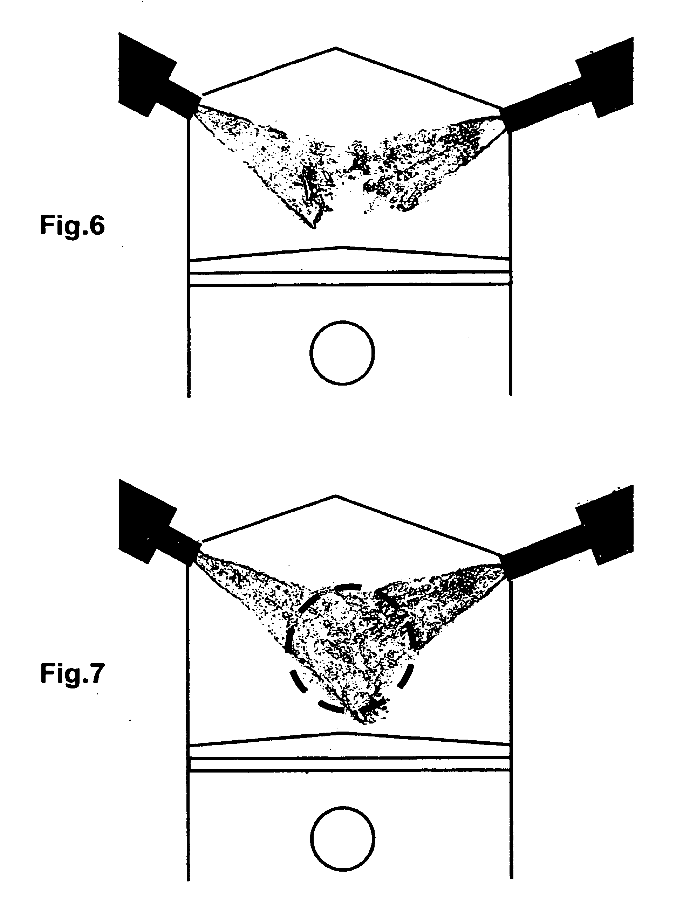

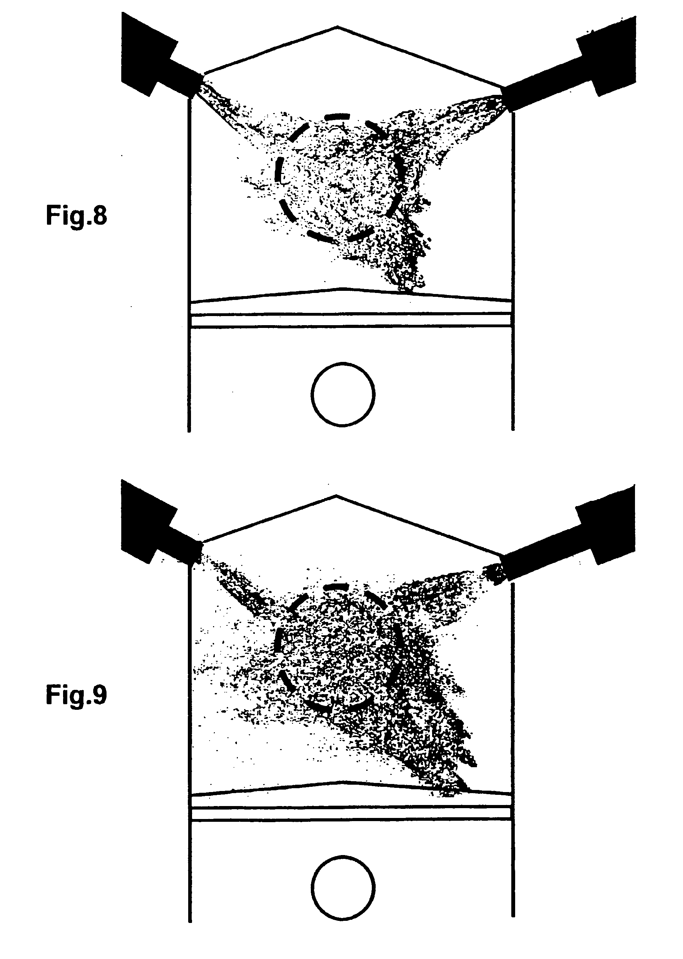

Wie aus den Figuren 1 bis 9 ersichtlich, wird für den Brennraum 2 eines Mehrzylinder-Ottomotors ein geschlossener Kraftstoffmantel 6 mit einem von diesem eingeschlossenen Luftkern 6 aufbereitet, indem der Kraftstoff durch zwei Einspritzdüsen 1 und 1a direkt in den Brennraum eingespritzt wird, wobei die Symmetrieachsen der Strömungen beider Einspritzdüsen unterschiedliche Winkel aufweisen und in einem Punkt zusammentreffen. Dadurch treffen die Kraftstoff-Mantelflächen aus beiden Düsen gemäß der Figuren 7 -9 etwa in der Mitte des Brennraumes aufeinander. Auf Grund der Tatsache, dass die Kraftstoff-Mantelfläche jeder Düse als Hohlkegel ausgebildet ist, ergibt dieses Kreuzen beider Strömungen eine in sich geschlossene Kraftstoffoberfläche, die als Kraftstoffmatel 6 einen Luftkern 7 einschließt. Die Kraftstoffoberfläche des Kraftstoffmantels 6 befindet sich an einer Stelle in unmittelbarer Nähe der Zündkerze 4.

Infolge der dünnen Kraftstoffoberfläche bzw. des eingeschlossenen Luftkerns kommt bei der Aufwärtsbewegung des Kolbens 5 eine Verformung der Kraftstoffwolke 6 zustande, wodurch ein Kraftstoffaufprall auf den Kolben weitgehend vermieden wird.

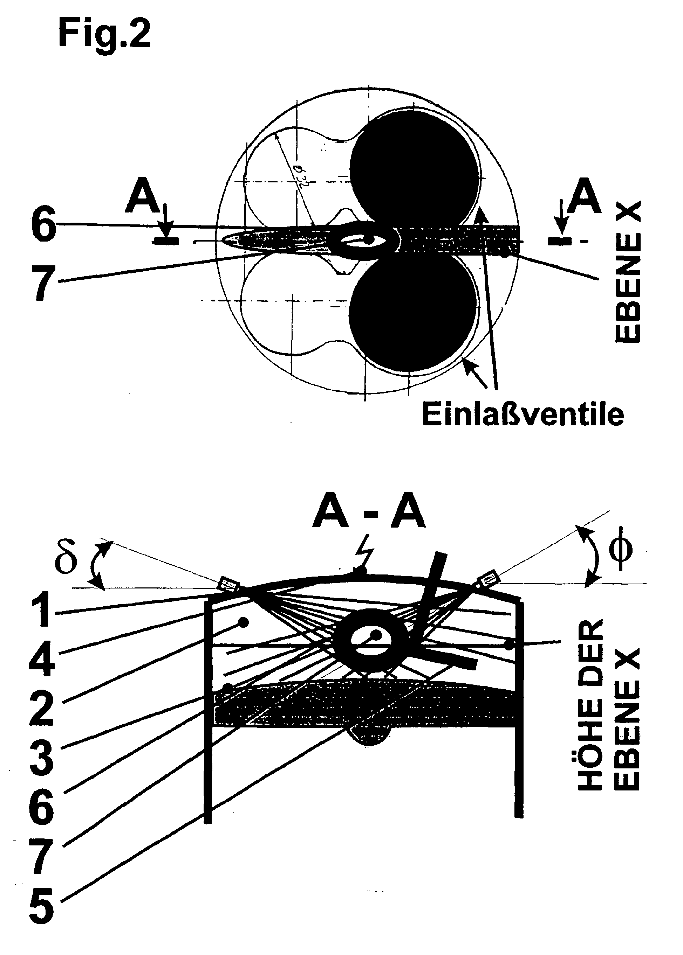

Wie in Fig. 2 dargestellt ist, können die Einspritzdüsen derart plaziert werden, dass die Symmetrieachsen der Strömungen in horizontaler und vertikaler Projektion unterschiedliche Winkel aufweisen.

Durch eine geeignete Kombination der Strahlwinkel und der Achsenlage jeder Düse ist es möglich, den Kraftstoff auch bei geöffneten Einlassventilen, ohne direkten Kontakt des Einspritzstrahls mit einem Ventil einzuspritzen. Eine solche Verlängerung der Gemischbildungsdauer in die Ladungswechselphase hinein ist insbesondere bei Direkteinspritzung in Motoren mit besonders hoher Drehzahl von Vorteil.

### Bezugszeichenliste

- 1: - Einspritzdüse
- 1a: - Einspritzdüse
- 2: - Brennraum
- 3: - Kolben
- 4: - Zündkerze
- 5: - Einlassventil
- 6: - Kraftstoff-Mantel
- 7: - Luftkern

## Patentansprüche

1. Gemischbildungs- und Brennverfahren für Wärmekraftmaschinen mit Kraftstoff-Direkteinspritzung durch den Einsatz von Kraftstoffeinspritzdüsen (1) in den Brennraum (2), mit deren Hilfe Kraftstoffstrahlen mit kegelförmiger Kraftstoffoberfläche (6) gebildet werden, wobei der Brennraum (2) von einem überwiegend unprofilierten Boden des Kolbens (3) begrenzt wird, **dadurch gekennzeichnet, daß** mittels zueinander winklig angeordneter Achsen von wenigsten zwei Einspritzdüsen (1, 1 a) die hohlkegelförmigen Kraftstoffstrahlen sich innerhalb des Brennraumes (2) durchdringen und
**daß** in einem konstruktiv wählbaren Bereich des Brennraums (2) von den sich teilweise durchdringenden Hohlkegelstrahlen der Krafststoff-Einspritzdüsen (1,1a) wenigstens ein von einem Kraftstoffmantel (6) eingeschlossener Luftkern (7) gebildet wird.

2. Gemischbildungs- und Brennverfahren nach dem Anspruch 1, **dadurch gekennzeichnet, daß** die von den einzelnen Kraftstoff-Einspritzdüsen (1, 1a) gebildeten Hohlkegelwinkel unterschiedlich dimensioniert werden.

3. Gemischbildungs- und Brennverfahren nach einem der Ansprüche 1 und 2, **dadurch gekennzeichnet, daß** die von den Achsen der Kraftstoff-Einspritzdüsen (1, 1a) in einem Brennraum (2) gebildeten Projektionsebenen zueinander parallel oder winklig eingestellt werden.

4. Gemischbildungs- und Brennverfahren nach einem der Ansprüche 1 bis 3, **dadurch gekennzeichnet, daß** die eingesetzten Kraftstoff-Einspritzdüsen (1, 1a) mechanisch oder elektromagnetisch gesteuert werden.

5. Gemischbildungs- und Brennverfahren nach einem der Ansprüche 1 bis 4, **dadurch gekennzeichnet, daß** die eingestezten Kraftstoff-Einspritzdüsen (1, 1a) mittels eines Direkteinspritzsystems mit Hochdruckmodulation am Eingang der Einspritzdüsen (1, 1a) durch den Kraftstoff selbst gesteuert werden.

6. Gemischbildungs- und Brennverfahren nach einem der Ansprüche 1 bis 5, **dadurch gekennzeichnet, daß** eine oder mehrere hohlkegelförmige Krafstoffstrahlen um die eigenen Strömungsachse drallförmig in den Brennraum (2) eingespritzt werden.

7. Gemischbildungs- und Brennverfahren nach einem der Ansprüche 1 bis 6, **dadurch gekennzeichnet, daß** von einzelnen Kraftstoff-Einspritzdüsen (1, 1 a) verschiedene Kraftstoffe in den Brennraum (2) eingespritzt werden.

8. Gemischbildungs- und Brennverfahren nach einem der Ansprüche 1 bis 7, **dadurch gekennzeichnet, daß** als Kraftstoffe flüssige oder gasförmige Medien eingesetzt werden.

9. Gemischbildungs- und Brennverfahren nach einem der Ansprüche 1 bis 5, **dadurch gekennzeichnet, daß** die Zündung des gebildeten Kraftstoff-Luft-Gemischs durch Selbstzündung oder mittels Zündkerzen (4) vorgenommen wird.

10. Gemischbildungs- und Brennverfahren nach einem der Ansprüche 1 bis 9, **dadurch gekennzeichnet, daß** die Bildung einer in sich geschlossenen Kraftstoffoberfläche (6) mittels einander durchdringender Hohlkegelstrahlen mit eingeschlossenem Luftkern (7) in den Brennräumen (2) von Hubkolben-, Drehkolben- oder Strömungsmaschinen vorgenommen wird.

11. Gemischbildungs- und Brennverfahren nach einem der Ansprüche 1 bis 10, **dadurch gekennzeichnet, daß** als Kraftstoff-Einspritzdüsen (1, 1 a) Mehrloch- und/oder Zapfendüsen eingesetzt werden.

12. Vorrichtung zur Durchführung des Verfahrens nach einem der Ansprüche 1 bis 11, bestehend aus einem Brennraum (2) mit Kraftstoff-Einspritzdüse (1), **dadurch gekennzeichnet,**
**daß** zwei Kraftstoff-Einspritzdüsen (1, 1a) angeordnet sind,
**daß** die Stömungsachsen der Kraftstoff-Einspritzdüsen (1, 1a) zueinander winklig angeordnet sind und
**daß** der Schnittpunkt der Strömungsachsen von wenigstens zwei Kraftstoff-Einspritzdüsen (1, 1 a) innerhalb oder außerhalb des Brennraums (2) angeordnet ist.

13. Vorrichtung zur Durchführung des Verfahrens nach dem Anspruch 12, **dadurch gekennzeichnet, daß** die Kraftstoff-Einspritzdüsen (1, 1 a) als hohlkegelförmige Mantelflächen bildende Mehrloch- oder Zapfendüsen ausgebildet sind.

14. Vorrichtung zur Durchführung des Verfahrens nach den Ansprüchen 12 und 13, **dadurch gekennzeichnet, daß** die senkrecht zum Boden des Kolbens (3) eines Hubkolbenmotors durch wenigstens zwei Kraftstoff-Einspritzdüsen (1, 1a) gebildeten Projektionsebenen winklig zueinander angeordnet sind.

15. Vorrichtung zur Durchführung des Verfahrens nach den Ansprüchen 12 und 13, **dadurch gekennzeichnet, daß** die senkrecht zum Boden des Kolbens (3) eines Hubkolbenmotors durch wenigstens zwei Kraftstoff-Einspritzdüsen (1, 1a) gebildeten Projektionsebenen parallel zueinander angeordnet sind.

16. Vorrichtung zur Durchführung des Verfahrens nach den Ansprüchen 12 und 13, **dadurch gekennzeichnet, daß** die senkrecht zum Boden des Kolbens (3) eines Hubkolbenmotors durch wenigstens zwei Kraftstoff-Einspritzdüsen (1, 1a) gebildeten Projektionsebenen in einer gemeinsamen Ebene angeordnet sind.

17. Vorrichtung zur Durchführung des Verfahrens nach den Ansprüchen 12 bis 16, **dadurch gekennzeichnet, daß** im Falle eines OttoMotors der Schwerpunkt des von einer durch die hohlkegelförmigen Kraftstoffstrahlen gebildeten geschlossenen Kraftstoffmantel (6) eingehüllten Luftkerns (7) in der Nähe des Zündpunktes angeordnet ist.

18. Vorrichtung zur Durchführung des Verfahrens nach den Ansprüchen 12 bis 17, **dadurch gekennzeichnet, daß** im Falle eines OttoMotors durch Bildung der Kraftstoffmantel (6) mit eingeschlossenem Luftkern (7) infolge Ladungsschichtung ohne Vorrichtungen zur Luftzufuhrregulierung gearbeitet werden kann.

19. Vorrichtung zur Durchführung des Verfahrens nach den Ansprüchen 12 bis 17, **dadurch gekennzeichnet, daß** im Falle eines OttoMotors die Vorrichtungen zur Luftzufuhrregulierung weitgehend entkoppelt von den Vorrichtungen zur Regulierung der Kraftstoffzufuhrmenge arbeitend ausgebildet sind.

20. Vorrichtung zur Durchführung des Verfahrens nach den Ansprüchen 12 und 19, **dadurch gekennzeichnet, daß** in den Kraftstoff-Einspritzdüsen (1, 1a) Drallelemente eingesetzt sind.

21. Vorrichtung zur Durchführung des Verfahrens nach den Ansprüchen 12 und 20, **dadurch gekennzeichnet, daß** die Kraftstoff-Einspritzdüsen (1, 1 a) mit elektromagnetischen oder mechanischen Steuerungselementen in Verbindung stehen.

22. Vorrichtung zur Durchführung des Verfahrens nach den Ansprüchen 12 und 21, **dadurch gekennzeichnet, daß** die Kraftstoff-Einspritzdüsen (1, 1 a) mit einem Hochdruck-Modulationselement zur druckabhängigen Düsensteuerung in Verbindung stehen.

## Claims

1. A mixture formation and combustion method for heat engines with direct fuel injection into the combustion space (2) by the use of fuel injection nozzles (1), with the aid of which fuel jets having a conical fuel surface (6) are formed, the combustion space (2) being delimited by a predominantly unprofiled head of the piston (3), **characterized in that**, by means of axis, arranged at an angle to one another, of at least two injection nozzles (1, 1a), the hollow-conical fuel jets penetrate one another within the combustion space (2), and **in that**, in a structurally selectable region of the combustion space (2), at least one air core (7) enclosed by a fuel envelope (6) is formed by the partially interpenetrating hollow cone jets of the fuel injection nozzle (1, 1 a).

2. The mixture formation and combustion method as claimed in claim 1, **characterized in that** the hollow cone angles formed by the individual fuel injection nozzles (1, 1 a) are dimensioned differently.

3. The mixture formation and combustion method as claimed in one of claims 1 and 2, **characterized in that** the projection planes formed by the axis of the fuel injection nozzle (1, 1a) in the combustion space (2) are set parallel to or at an angle to one another.

4. The mixture formation and combustion method as claimed in one of claims 1 till 3, **characterized in that** the fuel injection nozzles (1, 1 a) used are controlled mechanically or electromagnetically.

5. The mixture formation and combustion method as claimed in one of claims 1 till 4, **characterized in that** the fuel injection nozzles (1, 1a) used are controlled by the fuel itself by means of a direct injection system having high-pressure modulation at the inlet of the injection nozzles (1, 1 a).

6. The mixture formation and combustion method as claimed in one of claims 1 till 5, **characterized in that** one or more hollow-conical fuel jets are injected into the combustion space (2) in a tumbling manner about the specific flow axis.

7. The mixture formation and combustion method as claimed in one of claims 1 till 6, **characterized in that** different fuels are injected into die combustion space (2) by individual fuel injection nozzles (1, 1a).

8. The mixture formation and combustion method as claimed in one of claims 1 till 7, **characterized in that** the fuels used are liquid or gaseous media.

9. The mixture formation and combustion method as claimed in one of claims 1 till 5, **characterized in that** die ignition of the fuel/air mixture is carried out by autnignition or by means of the spark plugs (4).

10. The mixture formation and combustion method as claimed in one of claims 1 till 9, **characterized in that** the formation of a fuel surface (6) closed an itself is carried out by means of interpenetrating hollow cone jets with enclosed air core (7) into the combustion spaces (2) of reciprocatingpiston, rotary-piston or turbomachines.

11. The mixture formation and combustion method as claimed in one of claims 1 till 10, **characterized in that** the fuel injection nozzles (1, 1a) used are multihole and/or pintle nozzles.

12. A device for carrying out the method as claimed in one of claims 1 till 11, consisting of a combustion space (2) with a fuel injection nozzle (1), **characterized in that** two fuel injection nozzles (1, 1 a) are arranged, **in that** the flow axis of the fuel injection nozzles (1, 1 a) are arranged at an angle to one another, and **in that** the intersection point of the flow axis of at least two fuel injection nozzles (1, 1 a) is arranged inside or outside the combustion space (2).

13. The device for carrying out the method as claimed in claim 12, **characterized in that** the fuel injection nozzles (1, 1a) are designed as multihole or pintle nozzles forming hollow-conical surface areas.

14. The device for carrying out the method as claimed in claims 12 and 13, **characterized in that** the projection planes formed perpendicularly to the head of the piston (3) of a reciprocating-piston engine by means of at least two fuel injection nozzles (1, 1 a) are arranged at an angle to one another.

15. The device for carrying out the method as claimed in claims 12 and 13, **characterized in that** die projection planes formed perpendicularly to the head of the piston (3) of a reciprocating-piston engine by means of at least two fuel nozzles (1, 1 a) are arranged parallel to one another.

16. The device for carrying out the method as claimed in claims 12 and 13, **characterized in that** die projection planes formed perpendicularly to die head of the piston (3) of a reciprocating-piston engine by means of at least two fuel injection nozzles (1, 1a) are arranged in a common plane.

17. The device for carrying out the method as claimed in claims 12 till 16, **characterized in that**, in the case of a gasoline engine, the center of gravity of the air core (7) enveloped by a closed fuel envelope (6) formed by the hollow-conical fuel jets is arranged in the vicinity of the ignition point.

18. The device for carrying out the method as claimed in claims 12 till 17, **characterized in that**, in the case of a gasoline engine, owing to the formation of the fuel envelope (6) having an enclosed air core (7) as a result of charge stratification, work can be carried out without devices for regulating the air supply.

19. The device for carrying out the method as claimed in claims 12 till 17, **characterized in that**, in the case of a gasoline engine, the devices for regulating the air supply are designed to work in a manner largely decoupled from the devices for regulating the fuel supply quantity.

20. The device for carrying out the method as claimed in claims 12 and 19, **characterized in that** tumble elements are used in the fuel injection nozzles (1, 1 a).

21. The device for carrying out the method as claimed in claims 12 and 20, **characterized in that** the fuel injection nozzles (1, 1a) are connected to electromagnetic or mechanical control elements.

22. The device for carrying out the method as claimed in claims 12 and 21, **characterized in that** the fuel injection nozzles (1, 1a) are connected to a high-pressure modulation element for pressure-dependent nozzle control.

## Revendications

1. Procédé de mélange et de combustion pour moteurs thermiques à injection directe de carburant par l'utilisation d'injecteurs de carburant (1) dans la chambre de combustion (2), à l'aide desquels des jets de carburant ayant une surface de carburant (6) conique sont formés, la chambre de combustion (2) étant délimitée par un fond pour l'essentiel non profilé du piston (3), **caractérisé en ce qu'**au moyen d'axes formant des angles entre eux d'au moins deux injecteurs (1, 1 a), les jets de carburant en forme de cônes creux s'interpénètrent à l'intérieur de la chambre de combustion (2) et
**en ce que** dans une zone pouvant être choisie dans la construction de la chambre de combustion (2), les jets en forme de cônes creux interpénétrés des injecteurs de carburant (1, 1a) forment au moins un noyau d'air (7) renfermé par une enveloppe de carburant (6).

2. Procédé de mélange et de combustion selon la revendication 1, **caractérisé en ce que** les angles de cône creux formés par les différents injecteurs de carburant (1, 1a) sont de dimensions différentes.

3. Procédé de mélange et de combustion selon l'une des revendications 1 et 2, **caractérisé en ce que** les plans de projection formés par les axes des injecteurs de carburant (1, 1 a) dans une chambre de combustion (2) sont parallèles ou forment un angle entre eux.

4. Procédé de mélange et de combustion selon l'une des revendications 1 à 3, **caractérisé en ce que** les injecteurs de carburant (1, 1a) utilisés sont commandés de façon mécanique ou électromagnétique.

5. Procédé de mélange et de combustion selon l'une des revendications 1 à 4, **caractérisé en ce que** les injecteurs de carburant (1, 1a) utilisés sont contrôlés par le carburant lui-même au moyen d'un système d'injection directe à modulation sous haute pression à l'entrée des injecteurs (1, 1a).

6. Procédé de mélange et de combustion selon l'une des revendications 1 à 5, **caractérisé en ce qu'**un ou plusieurs jets de carburant en forme de cônes creux sont injectés en vrille autour de leur axe d'écoulement respectif dans la chambre de combustion (2).

7. Procédé de mélange et de combustion selon l'une des revendications 1 à 6, **caractérisé en ce que** les différents injecteurs de carburant (1, 1 a) injectent des carburants différents dans la chambre de combustion (2).

8. Procédé de mélange et de combustion selon l'une des revendications 1 à 7, **caractérisé en ce que** les carburants utilisés sont des fluides liquides ou gazeux.

9. Procédé de mélange et de combustion selon l'une des revendications 1 à 5, **caractérisé en ce que** l'allumage du mélange de carburant et d'air formé est réalisé par auto-allumage ou au moyen de bougies d'allumage (4).

10. Procédé de mélange et de combustion selon l'une des revendications 1 à 9, **caractérisé en ce que** la formation d'une surface de carburant (6) fermée au moyen de jets en cône creux interpénétrés renfermant un noyau d'air (7) dans les chambres de combustion (2) est réalisée par des pistons alternatifs, des pistons rotatifs ou des turbomachines.

11. Procédé de mélange et de combustion selon l'une des revendications 1 à 10, **caractérisé en ce que** les injecteurs de carburant (1, 1a) utilisés sont des injecteurs à plusieurs trous et/ou à téton.

12. Dispositif pour la mise en oeuvre du procédé selon l'une des revendications 1 à 11, composé d'une chambre de combustion (2) avec un injecteur d'injection de carburant (1), **caractérisé**
**en ce qu'**il est prévu deux injecteurs de carburant (1, 1a),
**en ce que** les axes d'écoulement des injecteurs de carburant (1, 1 a) forment un angle l'un par rapport à l'autre et
**en ce que** l'intersection des axes d'écoulement d'au moins deux injecteurs de carburant (1, I a) se situe à l'intérieur ou à l'extérieur de la chambre de combustion (2).

13. Dispositif pour la mise en oeuvre du procédé selon la revendication 12, **caractérisé en ce que** les injecteurs de carburant (1, 1a) sont conformés comme des injecteurs à plusieurs trous et/ou à téton formant des surfaces d'enveloppe en forme de cône creux.

14. Dispositif pour la mise en oeuvre du procédé selon les revendications 12 et 13, **caractérisé en ce que** les plans de projection formés perpendiculairement au fond du piston (3) d'un moteur à piston alternatif par au moins deux injecteurs de carburant (1, 1a) forment un angle l'un par rapport à l'autre.

15. Dispositif pour la mise en oeuvre du procédé selon les revendications 12 et 13, **caractérisé en ce que** les plans de projection formés perpendiculairement au fond du piston (3) d'un moteur à piston alternatif par au moins deux injecteurs de carburant (1, 1 a) sont parallèles l'un à l'autre.

16. Dispositif pour la mise en oeuvre du procédé selon les revendications 12 et 13, **caractérisé en ce que** les plans de projection formés perpendiculairement au fond du piston (3) d'un moteur à piston alternatif par au moins deux injecteurs de carburant (1, 1a) se trouvent dans le même plan.

17. Dispositif pour la mise en oeuvre du procédé selon les revendications 12 à 16, **caractérisé en ce que** dans le cas d'un moteur quatre-temps, le barycentre du noyau d'air (7) renfermé par une enveloppe de carburant (6) fermé constituée par les jets de carburant en forme de cônes creux se trouve à proximité du point d'allumage.

18. Dispositif pour la mise en oeuvre du procédé selon les revendications 12 à 17, **caractérisé en ce que** dans le cas d'un moteur quatre temps, la formation de l'enveloppe de carburant (6) avec le noyau d'air (7) qu'elle renferme permet de fonctionner, à la suite de la stratification de la charge, sans dispositifs de régulation de l'arrivée d'air.

19. Dispositif pour la mise en oeuvre du procédé selon les revendications 12 à 17, **caractérisé en ce que** dans le cas d'un moteur quatre-temps, le fonctionnement des dispositifs de régulation de l'admission d'air est dans une grande mesure découplé de celui des dispositifs de régulation de la quantité de carburant admis.

20. Dispositif pour la mise en oeuvre du procédé selon les revendications 12 et 19, **caractérisé en ce que** des éléments de vrillage sont prévus dans les injecteurs de carburant (1, 1a).

21. Dispositif pour la mise en oeuvre du procédé selon les revendications 12 et 20, **caractérisé en ce que** les injecteurs de carburant (1, 1a) communiquent avec des éléments de commande électromagnétiques ou mécaniques.

22. Dispositif pour la mise en oeuvre du procédé selon les revendications 12 et 21, **caractérisé en ce que** les injecteurs de carburant (1, 1 a) communiquent avec un élément de modulation sous haute pression pour un contrôle des injecteurs en fonction de la pression.
